# EUROPEAN PATENT SPECIFICATION

(11) **EP 2 879 399 B1**
(45) Date of publication and mention of the grant of the patent: **18.10.2017**
(21) Application number: 13195106.3
(22) Date of filing: 29.11.2013
(51) Int. Cl.: H04Q 9/00

(54) **WIRELESS MONITORING METHOD AND DEVICE THEREOF**
DRAHTLOSES ÜBERWACHUNGSVERFAHREN UND VORRICHTUNG DAFÜR
PROCÉDÉ DE SURVEILLANCE SANS FIL ET DISPOSITIF ASSOCIÉ

(43) Date of publication of application: 03.06.2015
(73) Proprietor: EVERSPRING INDUSTRY CO., LTD., New Taipei City 23666 (TW)
(72) Inventor: Chiang, Chien-Ming, 236 Tucheng Dist., New Taipei City (TW)
(74) Representative: Loo, Chi Ching

(56) References cited:
- GB-A- 2 443 021
- US-A1- 2005 055 417
- US-A1- 2007 182 584

## Description

### FIELD OF THE INVENTION

The present invention relates to a wireless monitoring method and device thereof and particularly to a wireless monitoring method that sets a plurality of wireless monitor devices as a monitor group by storing device identification codes to monitor in a hybrid fashion.

### BACKGROUND OF THE INVENTION

Household life quality is an important issue to most people. In recent years drastic lifestyle change and technology innovation take place. As a result, the nearby protection or services that are provided by man-power in the past have gradually evolved into remote security and management practices by incorporating with monitoring systems and monitoring software. Take the present monitoring system for instance. Before establishing the monitoring system the intended monitoring area has to be divided into a plurality of monitoring zones. Each monitoring zone has at least one detection device installed with function matching the requirement of the monitoring zone. Each detection device forms an information connection with a system host through a line telephone loop to transmit an environmental signal generated by detection to the system host. The system host judges the received environmental signals to confirm whether an abnormal condition occurs and generation of an alarm signal is needed. Reference of such techniques can be found in U.S. patent No. 8,194,695 and U.S. publication No. 2011310770.

While the centralized management through the system host can provide desired management and control on the monitor end, whether the line telephone loop functions normally or not cannot be controlled by the monitor end. In the event that disruption happens to the line telephone loop the service of the monitoring system is disabled. In addition, the number of connection that the system host can make at the same time is limited by the bandwidth of the line telephone loop. Hence when connection busy happens the system host cannot timely and securely receive the environmental signals from the detection devices. Aside from the constraint of bandwidth of the line telephone loop, when the number of the environmental signals received by system host has reached a certain amount, the operation capacity of the system host could be overloaded and fail to generate the alarm signals instantly as desired, therefore violating the original goal of enhancing household life quality. Furthermore, connecting each detection device with the system host through the line telephone loop also makes wiring in the monitoring zones complicated, and could cause difficulty on inspection and repairs.

US 2005 005 5417 A relates to a distributed sensor network, in which one or more devices, forming a collaborative group, are associated with a physical phenomenon based on geographical proximity. The sensor network is capable of detecting new phenomena and changing the membership of the collaborative group as the phenomenon changes. Sensors not associated with a detected phenomenon are available to detect new phenomenon, and one group may exist per phenomenon. Upon detection of a phenomenon, a group of nodes is formed and a leader node is elected. As the phenomenon changes over time, new devices come into proximity of the phenomenon and are prevented from forming independent groups associated with the phenomenon. This accomplished in a decentralized way with communication restricted to local neighbors. In a tracking sensor network using a relatively small number of sensors, the sensors are active and maintain a coherent belief associating their measurements with a single common vehicle.

### SUMMARY OF THE INVENTION

The primary object of the present invention is to solve the problems of installation difficulty and unchangeable issue occurred to the conventional monitoring system.

To achieve the foregoing object the present invention provides a wireless monitoring method that comprises the steps of:
Step 1: providing a first wireless monitoring device and at least two second wireless monitoring devices to detect respectively ambient states and output respectively first state data and second state data respectively, each of the at least two second wireless monitoring devices including a device identification code;
Step 2: registering at least two device identification (ID in short hereinafter) codes of the second wireless monitoring devices in the first wireless monitoring device, and setting the first wireless monitoring device and the second wireless monitoring devices whose device identification code has been registered as a monitor group;
Step 3: setting a state monitor condition in the first wireless monitoring device and outputting at least one control signal when the state monitor condition is met;
Step 4: using the first wireless monitoring device to detect the at least two second wireless monitoring devices within a connection range thereof and judging whether the device ID codes of the at least two second wireless monitoring devices are registered in the first wireless monitoring device to belong to the monitor group; if the judging outcome is positive, letting the first wireless monitoring device receive the second state data output from the second wireless monitoring devices; and
Step 5: using the first wireless monitoring device to judge whether the first state data and the second state data meet the state monitor condition, and letting the first wireless monitoring device output the at least one control signal to trigger at least one electronic device when the state monitor condition is met.

In one embodiment, the step 4 further includes the sub-steps as follows: sending information connection requests from the first wireless monitoring device to the at least two second monitoring devices; getting the device ID codes and connection address codes of the at least two second wireless monitoring device when the at least two second wireless monitoring devices respond the information connection requests; judging whether the device ID codes of the at least two second wireless monitoring devices are registered in the first wireless monitoring device to belong to the monitor group; if the judging outcome is positive, letting the first wireless monitoring device connect with the second wireless monitoring devices according to the connection address codes.

In another embodiment, the first wireless monitoring device includes a first state detection unit for detecting state changes, a micro control unit connected to the first state detection unit and saving the at least two device identification codes of the second wireless monitoring devices and the state monitor condition, and a communication module connected to the micro control unit and communicating with the second wireless monitoring device, while the second wireless monitoring device includes a second state detection unit.

In yet another embodiment, the first state detection unit can be selected from the group consisting of a temperature sensor, a smoke sensor, a vibration sensor, a movement sensor, an electric conductivity sensor, a blood pressure sensor, a blood sugar sensor, a heartbeat sensor and a sound sensor.

In yet another embodiment, the second state detection unit can be selected from the group consisting of a temperature sensor, a smoke sensor, a vibration sensor, a movement sensor, an electric conductivity sensor, a blood pressure sensor, a blood sugar sensor, a heartbeat sensor and a sound sensor.

In addition to the aforesaid wireless monitoring method, the invention also provides a wireless monitoring device which comprises a state detection unit, a communication module and a micro control unit. The state detection unit detects ambient states and outputs state data. The communication module connects wirelessly with other wireless monitoring devices to output the state data and receive other state data from the other wireless monitoring device. The micro control unit electrically connects with the state detection unit to receive the state data and stores a plurality of device ID codes of the other wireless monitoring devices, and outputs a control signal when judging that the state data and the other state data meet the state monitor condition.

In yet another embodiment, the communication module can adopt a communication protocol which is selected from the group consisting of IEEE802.15.1, IEEE802.11 and IEEE802.15.4.

In yet another embodiment, the state detection unit can be selected from the group consisting of a temperature sensor, a smoke sensor, a vibration sensor, a movement sensor, an electric conductivity sensor, a blood pressure sensor, a blood sugar sensor, a heartbeat sensor and a sound sensor.

The method and structure of the invention, compared with the conventional techniques, provides features as follows:
1. By directly connecting with multiple of the wireless monitoring devices and exchanging state data, the invention can judge whether the state monitor condition is met to output the control signal. Hence there is no need of relaying through a security system host that occurs to the conventional monitoring system. As a result, security failure caused by malfunction of the security system host or line disruption can be avoided.
2. By exchanging information through wireless communication technique between two wireless monitoring devices, the problem of complex wiring occurred to the convention monitoring system implemented by line telephone loop can be averted.
3. By registering the device ID code in the wireless monitoring device, the other wireless monitoring devices in the monitor group can securely establish connection with the wireless monitoring device to generate interactive monitoring. Moreover, by storing the device ID codes in advance users can add other wireless monitoring devices which have been registered in the wireless monitoring device according to implementation requirements.

The foregoing, as well as additional objects, features and advantages of the invention will be more readily apparent from the following detailed description, which proceeds with reference to the accompanying drawings.

### BRIEF DESCRIPTION OF THE DRAWINGS

FIG. 1 is a block diagram of the devices used in the wireless monitoring method of the invention.
FIG. 2 is a schematic view of devices in an embodiment of the wireless monitoring method of the invention.
FIG. 3 is a flowchart of an embodiment of the wireless monitoring method of the invention.
FIG. 4 is a flowchart of sub-steps of step 4 in an embodiment of the wireless monitoring method of the invention.

### DETAILED DESCRIPTION OF THE PREFERRED EMBODIMENTS

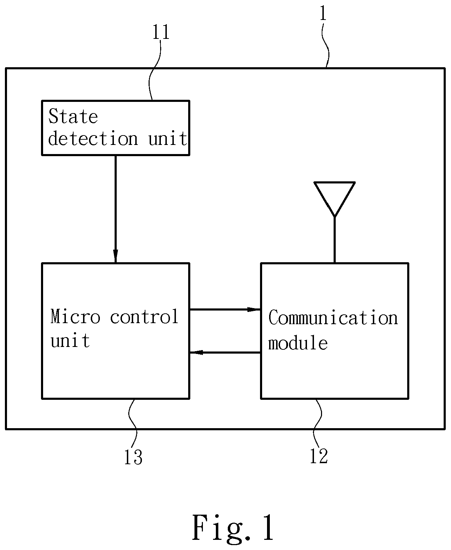

The wireless monitoring method and device according to the invention is implemented through a plurality of wireless monitoring devices installed in a same monitoring zone to generate a hybrid monitoring effect. Please referring to FIG. 1, the wireless monitoring device 1 comprises a state detection unit 11, a communication module 12 and a micro control unit 13. The state detection unit 11 detects ambient states in normal conditions and outputs a state data. The ambient states can be state variations within the monitoring zone or physiological information of a user within the monitoring zone. The state data is a detection result corresponding to the state variations (or physiological information). More specifically, the state detection unit 11 can be a temperature sensor, a smoke sensor, a vibration sensor, a movement sensor, an electric conductivity sensor, a blood pressure sensor, a blood sugar sensor, a heartbeat sensor or a sound sensor. The communication module 12 forms an information connection with another state detection unit 11 so that the two state detection units 11 can form information connection in the normal conditions to exchange state data. The communication module 12 can adopt many types of communication techniques, such as IEEE802.15.1 communication protocol, IEEE802.11 communication protocol or IEEE802.15.4 communication protocol. The micro control unit 13 is commonly called MCU in short and connects with the state detection unit 11 and the communication module 12. The micro control unit 13 saves a plurality of device ID codes and a state monitor condition. Each of the plurality of device ID code corresponds to one wireless monitoring device 1, and another wireless monitoring device 1 whose device ID code is registered in the wireless monitoring device 1 belongs to a monitor group with the wireless monitoring device 1. The wireless monitoring device 1 in practice stores merely the device ID codes which belong to the monitor group. In other words, not every wireless monitoring device 1, within the monitoring zone is set to belong the monitor group. The monitor group can be adjusted and set according to monitor purpose. Furthermore, the micro control unit 13 can also register connection address codes of every wireless monitoring devices 1 in the monitor group so that the communication module 12 can establish information connections with the corresponding wireless monitoring devices 1 according to the connection address codes. The state monitor condition can be a judgmental formula based on the state data. It judges whether the state data conform to the limitations thereof. If the outcome is positive, at least one control signal is outputted to activate at least one electronic device to operation.

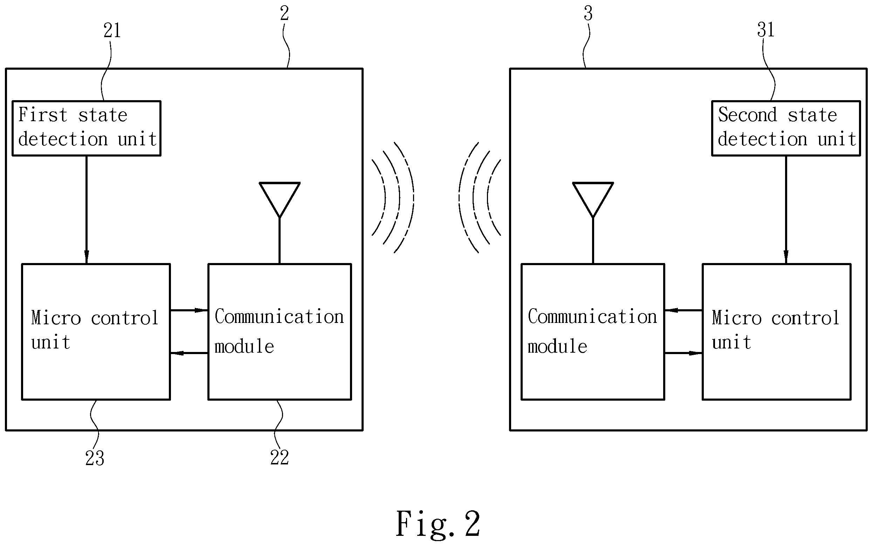

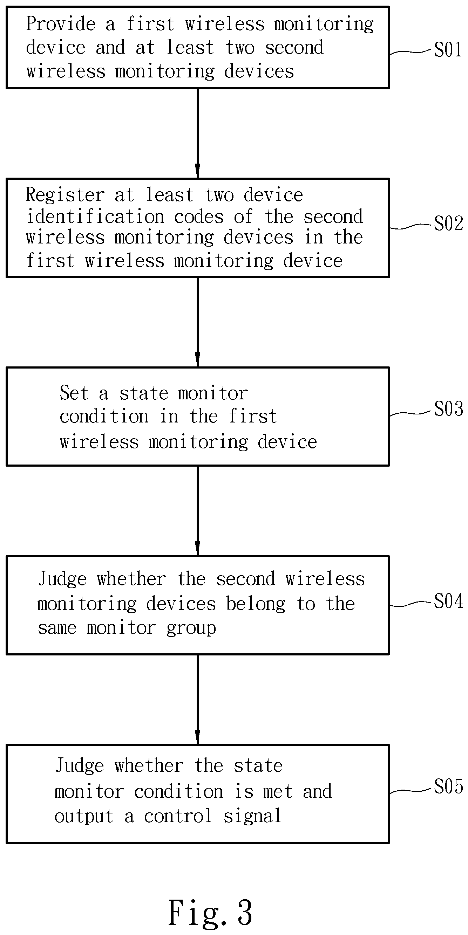

To facilitate discussion of the monitoring method of the invention without misunderstanding of the meaning of multiple wireless monitoring device 1, the wireless monitoring device 1 herein is divided into a first wireless monitoring device 2 and at least two second wireless monitoring device 3 (as shown in FIG. 2). Also referring to FIG. 3, the wireless monitoring method of the invention includes the steps as follows:
Step 1 (S01): providing the first wireless monitoring device 2 and at least two second wireless monitoring device 3 to detect ambient states and output respectively first state data and second state data, each of the at least two second wireless monitoring devices including a device identification code;
Step 2 (S02): registering at least two device ID codes of the second wireless monitoring devices 3 in the first wireless monitoring device 2, and setting the first wireless monitoring device 2 and the second wireless monitoring device 3 whose device identification code has been registered as a monitor group;
Step 3 (S03): setting a state monitor condition in the first wireless monitoring device 2 and outputting a control signal when the state monitor condition is met;
Step 4 (S04): using the first wireless monitoring device 2 to detect the at least two second wireless monitoring devices 3 within a connection range of the first wireless monitoring device 2, and judging whether the device ID codes of the at least two second wireless monitoring devices 3 are registered in the first wireless monitoring device 2 to belong to the monitor group; if the judging outcome is positive, letting the first wireless monitoring device 2 receive the second state data output from the second wireless monitoring devices 3; and
Step 5 (S05): using the first wireless monitoring device 2 to judge whether the first state data and the second state data meet the state monitor condition, and letting the first wireless monitoring device 2 output the at least one control signal to trigger at least one electronic device.

An embodiment is provided as follow to facilitate discussion of implementation of the wireless monitoring method mentioned above. First, the first wireless monitoring device 2 and at least two second wireless monitoring device 3 are installed within the monitoring zone (such as a household environment). The first wireless monitoring device 2 includes a first state detection unit 21 which can be a temperature sensor, a smoke sensor, a vibration sensor, a movement sensor, an electric conductivity sensor, a blood pressure sensor, a blood sugar sensor, a heartbeat sensor or a sound sensor. The second wireless monitoring device 3 includes a second state detection unit 31 which also can be a temperature sensor, a smoke sensor, a vibration sensor, a movement sensor, an electric conductivity sensor, a blood pressure sensor, a blood sugar sensor, a heartbeat sensor or a sound sensor. In this embodiment, for example, the monitoring zone is a kitchen, the first state detection unit 21 is a temperature sensor, and the second state detection unit 31 is a smoke sensor. Then, at least two device ID codes of the second wireless monitoring device 3 are registered in the first wireless monitoring device 2 and the corresponding second wireless monitoring devices 3 are set as a monitor group with the first wireless monitoring device 2. The first wireless monitoring device 2 not only stores the device ID code of every second wireless monitoring device 3 currently in used, but can also include the device ID codes of additional second wireless monitoring devices 3 that could be possibly added to the same monitor group. After step 2 (S02) is finished, proceed to step 3 (S03) to set the state monitor condition on the first monitoring device 2. The state monitor condition, in this embodiment, is conditions for judging whether a conflagration occurs in the monitoring zone (kitchen), such as smoke concentration and existing temperature of the kitchen. At step 4 (S04), the frst wireless monitoring device 2 gets the device ID code of each second wireless monitoring device 3 within the connection range, and judges whether the received device ID code is stored in the first wireless monitoring device 2; if the judging outcome is positive, the first wireless monitoring device 2 receives the second state data output from the second wireless monitoring device 3 in normal conditions. At step 4 (S04), if the first wireless monitoring device 2 detects the device ID code that is not stored therein, the first wireless monitor device 2 does not receive the data transmitted from the corresponding second wireless monitoring device 3. Finally, at step 5 (S05), the monitoring method of the invention enters a monitoring stage. The first wireless monitoring device 2 detects the monitoring zone and generates the first state data in the normal conditions and gets the second state data output by any second wireless monitoring device 3 belonging to the monitor group, and judges whether the first state data and the second state data meet the state monitor condition. If the judging outcome is positive, the first wireless monitoring device 2 outputs at least one control signal to trigger at least one electronic device to alert users to the happening incidents or to take actions immediately. The electronic device can be a device capable of performing corresponding actions when an incident happens.

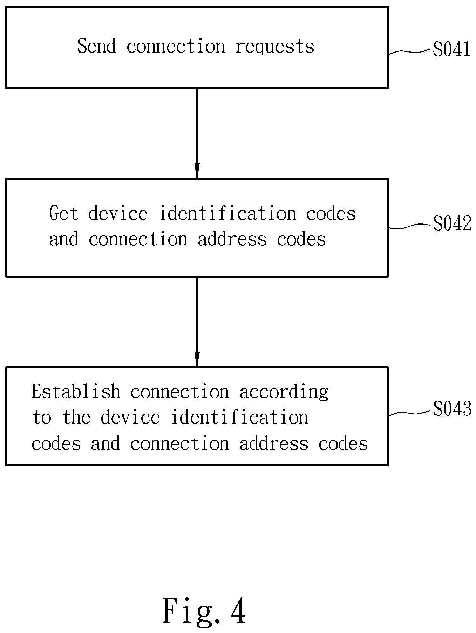

Please refer to FIG. 4 for the sub-steps (S041- S042) of the step 4 (S04) previously discussed. After the first and second wireless monitoring devices 2 and 3 have been installed in the monitoring zone, the first wireless monitoring device 2 sends information connection requests to the at least two second wireless monitoring devices 3 in the monitoring zone. After the at least two second wireless monitoring devices 3 have responded the information connection request, the first wireless monitoring device 2 gets the device ID codes and connection address data of the at least two second wireless monitoring devices 3, and judges whether the device ID codes are stored therein. If the judging outcome is positive, the communication module 22 of the first wireless monitoring device 2 connects with the second wireless monitoring devices 3 according to the connection address codes.

As a conclusion, the wireless monitoring method provided by the invention is implemented through a plurality of wireless monitoring devices. Each of the wireless monitoring devices includes a state detection unit to produce a state data, a micro control unit and a communication module. During implementation, first, the wireless monitoring device gets a device ID code of another wireless monitoring device within a connection range thereof, and judges whether the device ID code is stored therein and belongs to a monitor group. If the judging outcome is positive, the wireless monitoring device gets another state data from the another wireless monitoring device and judges whether the state data and the another state data meet a state control condition, and outputs at least one control signal to trigger at least one electronic device when the result is positive.

## Claims

1. A wireless monitoring method, comprising the steps of:
Step 1: providing a plurality of wireless monitoring devices (2, 3) to detect ambient states and respectively output state data, each of the plurality of wireless monitoring devices (2, 3) including a device identification code;
Step 2: arranging the wireless monitoring devices (2, 3) to form a monitor group by reciprocally registering the device identification codes of the other wireless monitoring devices (2, 3);
Step 3: setting a state monitor condition in each of the wireless monitoring devices (2, 3) and outputting at least one control signal when the state monitor condition is met; **characterized in that** the method further comprises:
Step 4: using every wireless monitoring device (2, 3) to detect the other wireless monitoring devices (2, 3) within a connection range and judging whether the device identification codes of the other wireless monitoring devices (2, 3) belong to the monitor group, and letting every wireless monitoring device (2, 3) output the state data to the other wireless monitoring devices (2, 3) and receive the state data output from the other wireless monitoring devices (3, 3) when the judging outcome is positive; and
Step 5: using every wireless monitoring device (2, 3) to judge whether these state data meet the state monitor condition of every wireless monitoring device (2, 3), and letting every wireless monitoring device (2, 3) respectively output the at least one control signal to trigger at least one electronic device when the state monitor condition is met.

2. The wireless monitoring method of claim 1, wherein the step 4 further includes sub-steps of:
sending information connection requests by every wireless monitoring device (2) to the other wireless monitoring devices (3);
getting the device identification codes and connection address codes of the other wireless monitoring devices (3) by every wireless monitoring device (2) when the other wireless monitoring devices (3) respond the information connection requests; and
judging whether the device identification codes of the other wireless monitoring devices (3) are registered in every wireless monitoring device (2) to belong to the monitor group, and letting every wireless monitoring device (2) connect with the other wireless monitoring devices (3) through the connection address codes when the judging outcome is positive.

3. The wireless monitoring method of claim 1 or 2, wherein each of the wireless monitoring device (2) includes a state detection unit (21) for detecting state variations, a micro control unit (23) connected to the state detection unit (21) and saving the device identification codes of the other wireless monitoring devices (3) and the state monitor condition, and a communication module (22) connected to the micro control unit (23) and communicating with the other wireless monitoring device (3).

4. The wireless monitoring method of any of the claims 1 to 3, wherein the state detection unit (21) is selected from the group consisting of a temperature sensor, a smoke sensor, a vibration sensor, a movement sensor, an electric conductivity sensor, a blood pressure sensor, a blood sugar sensor, a heartbeat sensor and a sound sensor.

5. A monitor group of wireless monitoring devices (1), every wireless monitoring device (1) comprising a state detection unit (11) detecting ambient states and outputting a state data, and a communication module (12) connecting wirelessly with the other wireless monitoring devices (1), **characterized in that**
every wireless monitoring device (1) comprises a micro control unit (13) which is electrically connected with the state detection unit (11) to receive the state data and stores a plurality of device identification codes of the other wireless monitoring devices (1) and a state monitor condition, every wireless monitoring device (1) outputs the state data to the other wireless monitoring devices (1) and receives the other state data from the other wireless monitoring devices (1), the micro control unit (13) judges whether these state data meet the state monitor condition, each of the wireless monitoring devices (1) outputs a control signal when judging that these state data meet the state monitor condition.

6. The monitor group of wireless monitoring devices of claim 5, wherein the communication module (12) adopts a communication protocol selected from the group consisting of IEEE802.15.1, IEEE802.11 and IEEE802.15.4.

7. The monitor group of wireless monitoring devices of claim 5 or 6, wherein the state detection unit (11) is selected from the group consisting of a temperature sensor, a smoke sensor, a vibration sensor, a movement sensor, an electric conductivity sensor, a blood pressure sensor, a blood sugar sensor, a heartbeat sensor and a sound sensor.

## Patentansprüche

1. Drahtloses Überwachungsverfahren, umfassend die Schritte:
Schritt 1: Bereitstellen einer Vielzahl drahtloser Überwachungsgeräte (2, 3), um Umgebungszustände zu erkennen und entsprechend Zustandsdaten auszugeben, wobei jedes aus der Vielzahl von drahtlosen Überwachungsgeräten (2, 3) einen Gerätidentifizierungscode enthält;
Schritt 2: Einrichten der drahtloses Überwachungsgeräte (2, 3), durch wechselseitiges Registrieren der Gerätidentifizierungscodes der anderen drahtlosen Überwachungsgeräte (2, 3) eine Überwachungsgruppe zu bilden;
Schritt 3: Festlegen einer Zustandsüberwachungsbedingung in jedem der drahtlosen Überwachungsgeräte (2, 3) und Ausgeben mindestens eines Steuersignals, wenn die Zustandsüberwachungsbedingung erfüllt ist;
**dadurch gekennzeichnet, dass** das Verfahren ferner umfasst:
Schritt 4: Verwenden jedes drahtlosen Überwachungsgeräts (2, 3), um die anderen drahtlosen Überwachungsgeräte (2, 3) innerhalb eines Verbindungsbereichs zu erkennen, und Beurteilen, ob die Gerätidentifizierungscodes der anderen drahtlosen Überwachungsgeräte (2, 3) zu der Überwachungsgruppe gehören, und jedes drahtlose Überwachungsgerät (2, 3) die Zustandsdaten an die anderen drahtlosen Überwachungsgeräte (2, 3) ausgeben lassen und die von den anderen drahtlosen Überwachungsgeräten (3, 3) ausgegebenen Zustandsdaten empfangen lassen, wenn das Beurteilungsergebnis positiv ist; und
Schritt 5: Verwenden jedes drahtlosen Überwachungsgeräts (2, 3), um zu beurteilen, ob diese Zustandsdaten die Zustandsüberwachungsbedingung jedes drahtlosen Überwachungsgeräts (2, 3) erfüllen, und jedes drahtlose Überwachungsgerät (2, 3) entsprechend das mindestens eine Steuersignal ausgeben lassen, um mindestens ein elektronisches Gerät auszulösen, wenn die Zustandsüberwachungsbedingung erfüllt ist.

2. Drahtloses Überwachungsverfahren nach Anspruch 1, wobei der Schritt 4 ferner folgende Unterschritte enthält:
Senden von Informationsverbindungsanfragen durch jedes drahtlose Überwachungsgerät (2) an die anderen drahtlosen Überwachungsgeräte (3);
Beziehen der Gerätidentifizierungscodes und von Verbindungsadresscodes der anderen drahtlosen Überwachungsgeräte (3) durch jedes drahtlose Überwachungsgerät (2), wenn die anderen drahtlosen Überwachungsgeräte (3) die Informationsverbindungsanfragen beantworten; und
Beurteilen, ob die Gerätidentifizierungscodes der anderen drahtlosen Überwachungsgeräte (3) in jedem drahtlosen Überwachungsgerät (2) dafür registriert sind, zu der Überwachungsgruppe zu gehören, und jedes drahtlose Überwachungsgerät (2) mit den anderen drahtlosen Überwachungsgeräten (3) durch die Verbindungsadresscodes verbinden lassen, wenn das Beurteilungsergebnis positiv ist.

3. Drahtloses Überwachungsverfahren nach Anspruch 1 oder 2, wobei jedes der drahtlosen Überwachungsgeräte (2) eine Zustandserkennungseinheit (21) zum Erkennen von Zustandsvariationen, eine Mikrosteuereinheit (23), die mit der Zustandserkennungseinheit (21) verbunden ist und die Gerätidentifizierungscodes der anderen drahtlosen Überwachungsgeräte (3) und die Zustandsüberwachungsbedingung abspeichert, und ein Kommunikationsmodul (22), das mit der Mikrosteuereinheit (23) verbunden ist und mit den anderen drahtlosen Überwachungsgeräten (3) kommuniziert, enthält.

4. Drahtloses Überwachungsverfahren nach einem der Ansprüche 1 bis 3, wobei die Zustandserkennungseinheit (21) ausgewählt ist aus der Gruppe bestehend aus einem Temperatursensor, einem Rauchsensor, einem Vibrationssensor, einem Bewegungssensor, einem elektrischen Leitfähigkeitssensor, einem Blutdrucksensor, einem Blutzuckersensor, einem Herzschlagsensor und einem Geräuschsensor.

5. Überwachungsgruppe drahtloser Überwachungsgeräte (1), wobei jedes drahtlose Überwachungsgerät (1) eine Zustandserkennungseinheit (11), die Umgebungszustände erkennt und Zustandsdaten ausgibt, und ein Kommunikationsmodul (12), das sich drahtlos mit den anderen drahtlosen Überwachungsgeräten (1) verbindet, umfasst, **dadurch gekennzeichnet, dass**
jedes drahtloses Überwachungsgerät (1) eine Mikrosteuereinheit (13) umfasst, die elektrisch mit der Zustandserkennungseinheit (11) verbunden ist, um die Zustandsdaten zu empfangen, und eine Vielzahl von Gerätidentifizierungscodes der anderen drahtlosen Überwachungsgeräte (1) und eine Zustandsüberwachungsbedingung speichert, jedes drahtlose Überwachungsgerät (1) die Zustandsdaten an die anderen drahtlosen Überwachungsgeräte (1) ausgibt und die anderen Zustandsdaten von den anderen drahtlosen Überwachungsgeräten (1) empfängt, die Mikrosteuereinheit (13) beurteilt, ob diese Zustandsdaten die Zustandsüberwachungsbedingung erfüllen, wobei jedes der drahtlosen Überwachungsgeräte (1) ein Steuersignal ausgibt, wenn es entscheidet, dass diese Zustandsdaten die Zustandsüberwachungsbedingung erfüllen.

6. Überwachungsgruppe drahtloser Überwachungsgeräte nach Anspruch 5, wobei das Kommunikationsmodul (12) ein Kommunikationsprotokoll ausgewählt aus der Gruppe bestehend aus IEEE802.15.1, IEEE802.11 und IEEE802.15.4 annimmt.

7. Überwachungsgruppe drahtloser Überwachungsgeräte nach Anspruch 5 oder 6, wobei die Zustandserkennungseinheit (11) ausgewählt ist aus der Gruppe bestehend aus einem Temperatursensor, einem Rauchsensor, einem Vibrationssensor, einem Bewegungssensor, einem elektrischen Leitfähigkeitssensor, einem Blutdrucksensor, einem Blutzuckersensor, einem Herzschlagsensor und einem Geräuschsensor.

## Revendications

1. Procédé de surveillance sans fil, comprenant les étapes consistant à :
étape 1 : fournir une pluralité de dispositifs de surveillance sans fil (2, 3) pour détecter des états ambiants et délivrer respectivement des donnée d'état, chacun de la pluralité de dispositifs de surveillance sans fil (2, 3) comprenant un code d'identification de dispositif ;
étape 2 : agencer les dispositifs de surveillance sans fil (2, 3) pour former un groupe de moniteur en enregistrant réciproquement les codes d'identification de dispositifs des autres dispositifs de surveillance sans fil (2, 3) ;
étape 3 : régler une condition de moniteur d'état dans chacun des dispositifs de surveillance sans fil (2, 3) et délivrer au moins un signal de commande lorsque ladite condition de moniteur d'état est satisfaite ;
**caractérisé en ce que** le procédé comprend en outre les étapes consistant à :
étape 4 : utiliser chaque dispositif de surveillance sans fil (2, 3) pour détecter les autres dispositifs de surveillance sans fil (2, 3) dans une plage de connexions et juger si les codes d'identification de dispositifs des autres dispositifs de surveillance sans fil (2, 3) appartiennent au groupe de moniteur et faire en sorte que chaque dispositif de surveillance sans fil (2, 3) délivre les données d'état aux autres dispositifs de surveillance sans fil (2, 3) et reçoive les données d'état délivrées par les autres dispositifs de surveillance sans fil (3, 3) lorsque le résultat du jugement est positif ; et
étape 5 : utiliser chaque dispositif de surveillance sans fil (2, 3) pour juger si ces données d'état répondent à la condition de moniteur d'état de chaque dispositif de surveillance sans fil (2, 3) et faire en sorte que chaque dispositif de surveillance sans fil (2, 3) délivre respectivement le au moins un signal de commande pour déclencher au moins un dispositif électronique lorsque la condition de moniteur d'état est satisfaite.

2. Procédé de surveillance sans fil selon la revendication 1, dans lequel l'étape 4 comprend en outre les sous-étapes consistant à :
envoyer des demandes de connexion d'informations par chaque dispositif de surveillance sans fil (2) aux autres dispositifs de surveillance sans fil (3) ;
obtenir les codes d'identification de dispositifs et les codes d'adresses de connexion des autres dispositifs de surveillance sans fil (3) par chaque dispositif de surveillance sans fil (2) lorsque les autres dispositifs de surveillance sans fil (3) répondent aux demandes de connexion d'informations ; et
juger si les codes d'identification de dispositifs des autres dispositifs de surveillance sans fil (3) sont enregistrées dans chaque dispositif de surveillance sans fil (2) pour appartenir au groupe de moniteur et faire en sorte que chaque dispositif de surveillance sans fil (2) se connecte aux autres dispositifs de surveillance sans fil (3) via les codes d'adresses de connexion lorsque le résultat du jugement est positif.

3. Procédé de surveillance sans fil selon la revendication 1 ou 2, dans lequel chacun des dispositifs de surveillance sans fil (2) comprend une unité de détection d'état (21) pour détecter des variations d'état, une micro-unité de commande (23) connectée à l'unité de détection d'état (21) et sauvegardant les codes d'identification de dispositifs des autres dispositifs de surveillance sans fil (3) et la condition de moniteur d'état, et un module de communication (22) connecté à la micro-unité de commande (23) et communiquant avec les autres dispositifs de surveillance sans fil (3).

4. Procédé de surveillance sans fil selon l'une quelconque des revendications 1 à 3, dans lequel l'unité de détection d'état (21) est sélectionnée dans le groupe constitué d'un capteur de température, d'un capteur de fumée, d'un capteur de vibrations, d'un capteur de mouvement, d'un capteur de conductivité électrique, d'un capteur de pression sanguine, d'un capteur de sucre du sang, d'un capteur de battements du coeur et d'un capteur de son.

5. Groupe de moniteur de dispositifs de surveillance sans fil (1), chaque dispositif de surveillance sans fil (1) comprenant une unité de détection d'état (11) détectant des états ambiants et délivrant des données d'état, et un module de communication (12) se connectant sans fil aux autres dispositifs de surveillance sans fil (1), **caractérisé en ce que** :
chaque dispositif de surveillance sans fil (1) comprend une micro-unité de commande (13) qui est connectée électriquement à l'unité de détection d'état (11) pour recevoir les données d'état et stocke une pluralité de codes d'identification de dispositifs des autres dispositifs de surveillance sans fil (1) et une condition de moniteur d'état, chaque dispositif de surveillance sans fil (1) délivre les données d'état aux autres dispositifs de surveillance sans fil (1) et reçoit les autres données d'état des autres dispositifs de surveillance sans fil (1), la micro-unité de commande (13) juge si ces données d'état répondent à la condition de moniteur d'état, chacun des autres dispositifs de surveillance sans fil (1) délivre un signal de commande lorsqu'ils jugent que ces données d'état répondent à la condition de moniteur d'état.

6. Groupe de moniteur de dispositifs de surveillance sans fil selon la revendication 5, dans lequel le module de communication (12) adopte un protocole de communication choisi dans le groupe constitué des suivants : IEEE802.15.1, IEEE802.11 et IEEE802.15.4.

7. Groupe de moniteur de dispositifs de surveillance sans fil selon la revendication 5 ou 6, dans lequel l'unité de détection d'état (11) est choisi dans le groupe constitué d'un capteur de température, d'un capteur de fumée, d'un capteur de vibrations, d'un capteur de mouvements, d'un capteur de conductivité électrique, d'un capteur de pression sanguine, d'un capteur de sucre du sang, d'un capteur de battements de coeur et d'un capteur de son.
